# EUROPÄISCHE PATENTANMELDUNG

(11) **EP 3 964 302 A1**
(43) Veröffentlichungstag der Anmeldung: **09.03.2022**
(21) Anmeldenummer: 20194176.2
(22) Anmeldetag: 02.09.2020
(51) Int. Cl.: B07B 1/48, B07B 4/02

(54) **SPANNWELLEN-SIEBVORRICHTUNG ZUR SEPARIERUNG VON INSEKTEN, INSBESONDERE VON INSEKTENLARVEN, ODER VON WÜRMERN UND RESTSTOFFEN SOWIE DIE VERWENDUNG EINER DERARTIGEN SPANNWELLEN-SIEBVORRICHTUNG**

(71) Anmelder: Bühler Insect Technology Solutions AG, 9240 Uzwil (CH)
(72) Erfinder: de Gelder, Vincent, 4207VC Gorichchem (NL); Baumann, Andreas, 9052 Niederteufen (CH)
(74) Vertreter: Vossius & Partner Patentanwälte Rechtsanwälte mbB

(57) **Zusammenfassung**

Offenbart ist eine Spannwellen-Siebvorrichtung (11) zur Separierung von Insekten, insbesondere von Insektenlarven, oder von Würmern und von Reststoffen, mit einem Siebrost (21), der einen ersten Siebabschnitt (22) und einen daran anschliessenden zweiten Siebabschnitt (32) aufweist, wobei die Maschengrösse im ersten Siebabschnitts (22) kleiner als die Maschengrösse im zweiten Siebabschnitts (32) ist. Weiter betrifft die Erfindung die Verwendung einer Spannwellen-Siebvorrichtung (11) zur Separierung von Insekten, insbesondere von Insektenlarven, oder von Würmern und von Reststoffen.

## Beschreibung

Die vorliegende Erfindung betrifft eine Spannwellen-Siebvorrichtung zur Separierung von Insekten, insbesondere von Insektenlarven, oder von Würmern und Reststoffen gemäss Anspruch 1 sowie deren Verwendung gemäss Anspruch 13.

Die Erfindung betrifft das Gebiet der Gewinnung von Nährstoffen, Futtermitteln und Nahrungsmitteln aus Insekten oder Würmern.

In den letzten Jahrzehnten hat das Interesse an der Verwendung von Insekten und von Würmern als Lebensmittel- und Futtermittelquelle zugenommen, insbesondere angesichts des Wachstums der Weltbevölkerung und des steigenden Bedarfs an alternativen und nachhaltigen Proteinquellen für die Nutztierindustrie. Da Insekten und Würmer üblicherweise reich an Proteinen und Fetten sind, weisen sie einen relativ hohen Nähr- bzw. Kalorienwert auf und sind dementsprechend besonders gut geeignet für die menschliche Ernährung sowie die Nutztierzucht.

Es ist im ökonomischen und ökologischen Sinne wünschenswert, Insekten und Würmer im industriellen Massstab zu züchten und zu verarbeiten, um standardisiert Nährstoffe zu produzieren, die anschliessend zur Herstellung von Lebens- oder Futtermitteln verwendet werden können.

Insekten und Würmer wachsen in sogenannten Containern oder Zuchtboxen auf, wobei ein Substrat aus einem oder mehreren Reststoffen sich ebenfalls in diesen Containern befindet. Der Wassergehalt des Substrats, insbesondere gegen Ende der Aufzucht, kann das Erntegewicht der Insektenlarven und Würmer entscheidend beeinflussen. Ist das Substrat zu trocken, ist die Futteraufnahme der Insekten und Würmer reduziert und entsprechend verlieren die Insektenlarven und Würmer Energie, was zu einem Verlust des Erntegewichts der Insektenlarven und der Würmer führt. Ein Substrat mit einem hohen Wassergehalt gegen Ende der Aufzucht führt dagegen zu einem höheren Gewicht der Insektenlarven und der Würmer.

Jedoch ist die Separierung von Insektenlarven und Würmern von den Reststoffen bzw. dem Substrat schwieriger, wenn das Substrat feucht und klebrig ist.

Eine Separierung mittels Nasssiebverfahren benötigt eine grosse Menge an Wasser, das anschliessend aufwändig von dem darin befindlichen Substrat gereinigt werden muss. Zudem beeinträchtigt das Nasssieben die Vermarktung des Substrates, z.B. als Düngemittel, da dabei wertvolle Mineralstoffe ausgewaschen werden.

Trockensiebverfahren neigen zu einer Verstopfung der Sieböffnungen mit dem feucht-klebrigen Substrat.

Überraschenderweise zeigte sich, dass eine dynamische Siebvorrichtung in Form einer Spannwellen-Siebvorrichtung geeignet sein könnte.

Aus der DE 1 206 372 A oder aus der EP 0 679 448 B1 sind Spannwellen-Siebvorrichtungen bereits bekannt.

Die DE 2 158 128 A1 offenbart zudem eine Spannwellen-Siebvorrichtung, bei der die Siebung mit abwechselnd gespannten ungespannten, hintereinander geschalteten Siebzonen durchgeführt wird.

Nachteilig an diesen bekannten Spannwellen-Siebvorrichtungen ist, dass diese für die Verwendung zur ausreichenden Siebung von Insekten, insbesondere von Insektenlarven, oder von Würmern mit Reststoffen, die einen hohen Feuchtigkeitsgehalt aufweisen, ungeeignet sind.

Es ist eine Aufgabe der vorliegenden Erfindung, zumindest einen Teil der aus dem Stand der Technik bekannten Nachteile zu überwinden. Insbesondere soll eine ausreichende Siebung von Insekten, insbesondere von Insektenlarven, oder von Würmern und Reststoffen, die einen hohen Feuchtigkeitsgehalt aufweisen, gewährleistet sein. Dabei soll eine industrielle Anwendung möglich sein.

Diese Aufgaben werden zumindest teilweise durch die Merkmale der unabhängigen Ansprüche gelöst. Weitere vorteilhafte Ausführungen ergeben sich aus Kombinationen mit den Merkmalen der entsprechenden Unteransprüche sowie aus den Ausführungen in der Beschreibung und den Figuren.

Gemäss der Erfindung weist die Spannwellen-Siebvorrichtung zur Separierung von Insekten, insbesondere von Insektenlarven, oder von Würmern und Reststoffen, einen Siebrost mit einem ersten Siebabschnitt und einem daran anschliessenden zweiten Siebabschnitt auf, wobei die Maschengrösse im ersten Siebabschnitts kleiner als die Maschengrösse im zweiten Siebabschnitts ist.

Durch den mechanischen Einfluss der Bewegung, nämlich Biegen und Entlasten, des Siebrostes im Betrieb der Spannwellen-Siebvorrichtung werden die an den Insekten, Insektenlarven oder Würmern haftenden Reststoffe von diesen gelöst und etwaige Agglomerate aufgelöst. Zudem erfolgt eine Siebung auch der Reststoffe, wobei die Feinanteile der Reststoffe gesammelt werden können. Insbesondere das in den ausgesiebten Feinanteilen enthaltene Chitin der Insekten und der Insektenlarven ist für eine weitere Verwertung von Interesse.

Im Bereich des ersten Siebabschnitts des Siebrostes ist die Maschengrösse derart gewählt, dass die Insekten, Insektenlarven oder Würmer nicht durch den Siebrost fallen, sondern nur die Feinanteile der Reststoffe. Durch die Bewegung des Siebrostes werden die Insekten, Insektenlarven oder Würmer zum zweiten Siebabschnitt des Siebrostes transportiert.

Die Maschengrösse des zweiten Siebabschnitts des Siebrostes ist derart gewählt, dass die Insekten, Insektenlarven oder Würmer durch diesen fallen, jedoch nicht grössere Teile der Reststoffe. Die grösseren Teile der Reststoffe werden durch die Bewegung des Siebrostes weitertransportiert, bis diese am Ende des Siebrostes von diesem herunterfallen. Die separierten Insekten, Insektenlarven oder Würmer werden anschliessend der weiteren Verarbeitung zugeführt.

Die erfindungsgemässe Spannwellen-Siebvorrichtung ermöglicht eine hochgradige Separierung der Insekten, der Insektenlarven oder der Würmer von den Reststoffen. Besonders hat sich diese Spannwellen-Siebvorrichtung vorteilhaft für die Separierung von lebenden Insekten sowie von lebenden Würmern, in allen Entwicklungsstufen, erwiesen.

Vorzugsweise weist der erste Siebabschnitt zumindest eine Siebmatte auf, welche vorteilhaft auswechselbar in der Spannwellen-Siebvorrichtung angeordnet ist. Damit ist eine lange Gebrauchstauglichkeit der Spannwellen-Siebvorrichtung gewährleistet, da eine defekte Siebmatte durch eine neue Siebmatte einfach ausgetauscht werden kann.

Vorteilhaft weist der erste Siebabschnitt mehrere Siebmatten auf, die weiter vorteilhaft auswechselbar in der Spannwellen-Siebvorrichtung angeordnet sind. Damit weist der erste Siebabschnitt eine hohe Flexibilität bei der Bewegung des Siebrostes auf. Die Siebmatten werden z. B. nach einer gewissen Gebrauchsdauer oder bei einem Defekt ausgewechselt. Bedarfsweise können die Siebmatten auch anders zueinander angeordnet werden, womit das Siebergebnis einfach anpassbar ist.

Als besonders vorteilhaft hat sich in Versuchen ein erster Siebabschnitt mit 6 bis 20 Siebmatten und weiter besonders vorteilhaft mit 8 bis 15 Siebmatten erwiesen.

Alternativ oder ergänzend weist der zweite Siebabschnitt zumindest eine Siebmatte auf, welche vorteilhaft auswechselbar in der Spannwellen-Siebvorrichtung angeordnet ist. Damit ist eine lange Gebrauchstauglichkeit der Spannwellen-Siebvorrichtung gewährleistet, da eine defekte Siebmatte durch eine neue Siebmatte einfach ausgetauscht werden kann.

Vorteilhaft weist der zweite Siebabschnitt mehrere Siebmatten auf, die weiter vorteilhaft auswechselbar in der Spannwellen-Siebvorrichtung angeordnet sind. Damit weist der zweite Siebabschnitt eine hohe Flexibilität bei der Bewegung des Siebrostes auf. Die Siebmatten werden z. B. nach einer gewissen Gebrauchsdauer oder bei einem Defekt ausgewechselt. Bedarfsweise können die Siebmatten auch anders zueinander angeordnet werden, womit das Siebergebnis einfach anpassbar ist.

Als besonders vorteilhaft hat sich in Versuchen ein zweiter Siebabschnitt mit 1 bis 20 Siebmatten und weiter besonders vorteilhaft mit 1 bis 10 Siebmatten erwiesen.

Bevorzugt beträgt die Maschengrösse der zumindest einen Siebmatte des ersten Siebabschnitts 60 mm2 bis 110 mm2, womit ein grosser Teil der Reststoffe durch den ersten Siebabschnitt des Siebrostes fallen, die Insekten, Insektenlarven oder Würmer jedoch auf diesem ersten Siebabschnitt verbleiben. Der Anteil der in diesem ersten Siebabschnitt durch die Maschen fallenden Anteile der Insekten, Insektenlarven oder Würmer wird aufgrund dieser Maschengrösse klein gehalten, was sich vorteilhaft auf den Ernteertrag auswirkt.

Vorzugsweise beträgt die Maschengrösse der zumindest einen Siebmatte des zweiten Siebabschnitts 140 mm2 bis 400 mm2, womit die Insekten, Insektenlarven oder Würmer durch die Maschen fallen, aber grobe Anteile der Reststoffe auf dem zweiten Siebabschnitt bis zu deren Abtransport verbleiben.

Bevorzugt ist im ersten Siebabschnitt die Maschengrösse einer Siebmatte unterschiedlich zu der Maschengrösse einer anderen Siebmatte, womit im ersten Siebabschnitt eine variierende Siebung erfolgt, was sich auf den Separierungsgrad der separierten Insekten, Insektenlarven oder Würmer und somit für deren weitere Verarbeitung vorteilhaft auswirkt.

Alternativ oder ergänzend ist im zweiten Siebabschnitt die Maschengrösse einer Siebmatte unterschiedlich zu der Maschengrösse einer anderen Siebmatte, womit im zweiten Siebabschnitt eine variierende Siebung erfolgt, was sich auf den Separierungsgrad der separierten Insekten, Insektenlarven oder Würmer und somit für deren weitere Verarbeitung vorteilhaft auswirkt.

Vorzugsweise weisen die Maschen einer Siebmatte unterschiedliche Maschengrössen auf, womit im ersten Siebabschnitt eine variierende Siebung erfolgt, was sich auf den Separierungsgrad der separierten Insekten, Insektenlarven oder Würmer und somit für deren weitere Verarbeitung zusätzlich vorteilhaft auswirkt.

Vorteilhaft ist die zumindest eine Siebmatte bzw. sind alle Siebmatten elastisch. Im Betrieb der Spannwellen-Siebvorrichtung wird die Siebmatte gespannt und entspannt, wodurch sich die Maschengeometrie verändert, insbesondere das Längen-zu-Breite-Verhältnis, womit einem Verstopfen der Maschen vorgebeugt wird.

Bevorzugt ist die Sieblänge des ersten Siebabschnitts länger als die Sieblänge des zweiten Siebabschnitts, so dass die Verweilzeit des zu siebenden Gutes im Bereich des ersten Siebabschnitts höher als im zweiten Siebabschnitt ist. Durch die längere Verweilzeit erfolgt eine intensivere Siebung, so dass ein höherer Separierungsgrad der separierten Insekten, Insektenlarven oder Würmer erreicht wird, was sich für deren weitere Verarbeitung zusätzlich vorteilhaft auswirkt.

Vorzugsweise ist zumindest der Siebrost geneigt angeordnet, was den Transport der Insekten, der Insektenlarven oder der Würmer auf dem sich bewegenden Siebrost weiter verbessert.

Als vorteilhaft hat sich eine Neigung des Siebrostes zur Horizontalen von maximal 25° erwiesen. Die Neigung wird durch den Winkel zwischen einer durch den Siebrost in dessen Längsrichtung bzw. Transportrichtung verlaufenden Mittellinie und der Horizontalen bestimmt.

Dabei zeigten sich vorteilhafte Ergebnisse insbesondere bei einer Neigung des Siebrostes zur Horizontalen von 5° bis 23° und weiter besonders bevorzugt bei einer Neigung des Siebrostes zur Horizontalen von 10° bis 15°.

Bevorzugt ist zumindest ein Rückhaltevorhang zum teilweisen Zurückhalten der Insekten, insbesondere der Insektenlarven, oder der Würmer sowie der Reststoffe vorgesehen, welche einen zu schnellen Transport derselben auf dem sich bewegenden Siebrost verhindern. Dadurch wird die Verweilzeit der Insekten, der Insektenlarven oder der Würmer sowie der Reststoffe erhöht, was eine hochgradige Siebung gewährleistet und sich für die weitere Verarbeitung der Insekten, der Insektenlarven oder der Würmer zusätzlich vorteilhaft auswirkt.

Weiter bevorzugt sind mehrere Rückhaltevorhänge vorgesehen, welche abschnittsweise eine Bremsung der transportierten Insekten, Insektenlarven oder Würmer sowie Reststoffe während deren Transport gewährleisten.

Vorzugsweise weist der zumindest eine Rückhaltevorhang eine Rückhaltehöhe auf, die maximal dem 0.95-fachen der Höhe zwischen dem Siebrost und einer Abdeckung über dem Siebrost oder einem - bezogen auf die Aufstellausrichtung der Spannwellen-Siebvorrichtung - oberen Ende eines über dem Siebrost befindlichen Bereichs entspricht, womit die Insekten, die Insektenlarven oder die Würmer sowie die Reststoffe ausreichend gebremst werden, aber trotzdem weiterhin auf dem sich bewegenden Siebrost transportierbar sind.

Unter der Höhe wird in diesem Zusammenhang die vertikale Länge zwischen einer durch den Siebrost in dessen Längsrichtung verlaufenden Mittellinie und der Abdeckung über dem Siebrost der Spannwellen-Siebvorrichtung verstanden. Ist keine Abdeckung über dem Siebrost vorgesehen, wird die Höhe durch die vertikale Länge zwischen der die Spannwellen-Siebvorrichtung durch den Siebrost in dessen Längsrichtung verlaufenden Mittellinie und dem - bezogen auf die Aufstellausrichtung der Spannwellen-Siebvorrichtung - oberen Ende eines über dem Siebrost befindlichen Bereichs verstanden.

Die Rückhaltevorhänge sind beispielsweise vertikal ausgerichtet. Alternativ können alle oder einzelne der Rückhaltevorhänge auch senkrecht zur Neigung des Siebrostes ausgerichtet sein, womit die Bremswirkung der Rückhaltevorhänge zumindest bereichsweise zusätzlich beeinflusst werden kann.

Bevorzugt ist zumindest eine Abscheideeinrichtung zum Abscheiden von Feinanteilen und/oder Leichtanteilen der Reststoffe vorgesehen, womit leichte Feinanteile bzw. Leichtanteile der Reststoffe einfach abgeschieden werden können. Unter den Begriffen "Feinanteile" und "Leichtanteile" werden Stoffe mit einer geringen Dichte verstanden. Insbesondere lässt sich mit der zumindest einen Abscheidevorrichtung das wertvolle Chitin einfach separieren.

Je nach Art der Reststoffe und der darin enthaltenen Feinanteile bzw. Leichtanteile hat sich eine Anordnung als vorteilhaft erwiesen, die mehr als eine Abscheideeinrichtung umfasst. Dabei können die Abscheideeinrichtungen unterschiedlicher Art sein oder in der Funktion sich unterscheiden, so dass bestimmte Feinanteile bzw. Leichtanteile separat mittels dieser Abscheideeinrichtungen aussortierbar sind.

Vorteilhaft umfasst die zumindest eine Abscheideeinrichtung eine Absaugeinrichtung, welche Feinanteile bzw. Leichtanteile absaugt. Dabei kann die Saugstärke vorteilhaft derart eingestellt sein, dass nur bestimmte Feinanteile bzw. Leichtanteile von dieser abgesaugt werden.

Alternativ umfasst die zumindest eine Abscheideeinrichtung eine Blaseinrichtung, welche Feinanteile bzw. Leichtanteile wegbläst. Dabei kann die Blasstärke vorteilhaft derart eingestellt sein, dass nur bestimmte Feinanteile bzw. Leichtanteile von dieser weggeblasen werden.

Dabei ist auch denkbar, dass die Abscheideeinrichtung auch nur ein Gebläse umfasst, das einerseits Saugen und andererseits auch Blasen kann, womit das entsprechend der Reststoffzusammensetzung vorteilhafteste Abscheiden mittels saugen oder blasen erfolgen kann.

Weiter vorteilhaft ist die zumindest eine Abscheideeinrichtung in Transportrichtung des Siebrostes vor dem Siebrost angeordnet, womit die entsprechenden Feinanteile der Reststoffe beim Zuführen bereits ausgeschieden werden.

Vorzugsweise ist zumindest eine Nachsiebeinrichtung zum Aussieben von gesiebten Anteilen vorgesehen, womit sich der Verlust an Insekten, insbesondere an Insektenlarven, oder an Würmern reduzieren lässt.

Vorteilhaft ist die zumindest eine Nachsiebeinrichtung dem ersten Siebabschnitt nachgeschaltet, so dass durch die Maschen des ersten Siebabschnitts fallende Insekten, Insektenlarven oder Würmer aussiebbar sind. Diese zumindest eine Nachsiebeinrichtung weist weiter vorteilhaft Maschengrössen und/oder Maschenausgestaltungen auf, die kleiner als die Maschengrössen und/oder Maschenausgestaltungen des ersten Siebabschnitts sind, womit Feinanteile weiterhin durch die Maschen des zumindest einen Nachsiebeinrichtung fallen können, aber durchgesiebte Insekten, Insektenlarven oder Würmer auffangbar sind.

Alternativ oder ergänzend ist die zumindest eine Nachsiebeinrichtung dem zweiten Siebabschnitt nachgeschaltet, so dass sich in den von dem zweiten Siebabschnitt ausgesiebten Reststoffen noch befindliche Insekten, Insektenlarven oder Würmer noch aussiebbar sind oder durch die Maschen des zweiten Siebabschnitts fallende Insekten, Insektenlarven oder Würmer in verschiedene Grössenklassen trennbar sind.

Um sich in den Reststoffen noch befindliche Insekten, Insektenlarven oder Würmer noch aussieben mit dieser Nachsiebeinrichtung auszusieben, weist diese zumindest eine Nachsiebeinrichtung weiter vorteilhaft Maschengrössen und/oder Maschenausgestaltungen auf, die grösser als die Maschengrössen und/oder Maschenausgestaltungen des zweiten Siebabschnitts sind, womit Reststoffe weiterhin durch die Maschen der zumindest einen Nachsiebeinrichtung fallen können, aber sich noch in den Reststoffen befindliche Insekten, Insektenlarven oder Würmer von dieser Nachsiebeinrichtung auffangbar sind.

Um durch die Maschen des zweiten Siebabschnitts fallende Insekten, Insektenlarven oder Würmer in verschiedene Grössenklassen zu trennen, weist diese zumindest eine Nachsiebeinrichtung weiter vorteilhaft Maschengrössen und/oder Maschenausgestaltungen auf, die kleiner als die Maschengrössen und/oder Maschenausgestaltungen des zweiten Siebabschnitts sind, womit Insekten, Insektenlarven oder Würmer weiterhin teilweise durch die Maschen des zumindest einen Nachsiebeinrichtung fallen können.

Vorteilhaft ist die zumindest eine Siebmatte bzw. sind alle Siebmatten einer Nachsiebeinrichtung elastisch und von der entsprechenden Mechanik der Spannwellen-Siebvorrichtung bewegbar. Im Betrieb der Spannwellen-Siebvorrichtung wird die Siebmatte gespannt und entspannt, wodurch sich die Maschengeometrie verändert, insbesondere das Längen-zu-Breite-Verhältnis, womit einem Verstopfen der Maschen auch beim Nachsieben vorgebeugt wird.

In einem weiteren Aspekt betrifft die Erfindung auch die Verwendung einer Spannwellen-Siebvorrichtung zur Separierung von Insekten, insbesondere von Insektenlarven, oder von Würmern und von Reststoffen gemäss zumindest einem Teil der vorgenannten Ausführungen.

Vorzugsweise wird die Spannwellen-Siebvorrichtung zur Siebung von lebenden Insekten, insbesondere von lebenden Insektenlarven, oder von lebenden Würmern verwendet, da die Insekten und Würmer in allen Entwicklungsstufen mit dieser Spannwellen-Siebvorrichtung schonend gesiebt und transportiert werden.

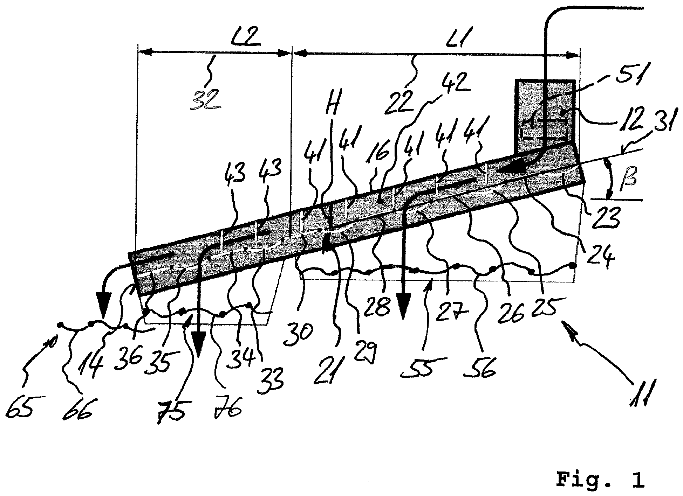

Im Folgenden wird die Erfindung anhand eines Ausführungsbeispiels und einer Zeichnung näher erläutert. Dabei zeigt die
- Figur 1:: eine erfindungsgemässe Spannwellen-Siebvorrichtung in einem schematischen Längsschnitt.

Die in der Figur 1 gezeigte Spannwellen-Siebvorrichtung 11 zur Separierung von lebenden Black Soldier Fly-Larven (BSF-Larven, schwarze Waffenfliegenlarven; Hermetia Illucens) oder von lebenden Mehlwürmern (z. B. Tenebrio Molitor, Zophobas Morio oder Alphitobius Diaperinus) und Reststoffen weist einen Siebrost 21 sowie eine - hier nicht dargestellte - in solchen Spannwellen-Siebvorrichtung 11 bekannterweise ausgebildete Mechanik zum Bewegen des Siebrostes 21 auf. Mittels dieser Mechanik wird der Siebrost 21 gebogen, gestreckt sowie entlastet. Dabei wird das sich auf dem Siebrost 21 befindliche Gut von einer Zuführöffnung 12 zu einer Ausgabeöffnung 14 bewegt und gleichzeitig findet eine Siebung statt.

Der Inhalt des Aufzuchtcontainers, also die Larven oder Mehlwürmer mit den Reststoffen, werden in eine Zuführöffnung 12 der Spannwellen-Siebvorrichtung geschüttet. Durch die Bewegung des Siebrostes 21 wird das sich auf dem Siebrost 21 befindliches Gut von der Zuführöffnung 12 zu einer Ausgabeöffnung 14 bewegt und gleichzeitig findet eine Siebung statt (siehe Pfeile) .

Der Siebrost 21 weist einen ersten Siebabschnitt 22 mit acht (8) Siebmatten 23 bis 30 auf. Diese Siebmatten 23 bis 30 sind auswechselbar in der Spannwellen-Siebvorrichtung 11 festgelegt, so dass diese austauschbar sind.

Die Maschengrösse der Siebmatten 23 bis 30 des ersten Siebabschnitts 22 betragen 60 mm2 bis 110 mm2. Die Siebmatten 23 bis 30 des ersten Siebabschnitts 22 können alle die gleiche Maschengrösse und/oder Maschenausgestaltung aufweisen.

Im vorliegenden Ausführungsbeispiel ist die Maschengrösse einer Siebmatte unterschiedlich zu der Maschengrösse einer anderen Siebmatte. Beispielsweise weisen die Siebmatten 23, 27 und 30 eine Maschengrösse von 3 mm x 29 mm auf. Die Maschengrösse der Siebmatten 24 und 26 beträgt dagegen 3.5 mm x 30 mm auf. Die Siebmatten 25, 28 und 29 weisen eine Maschengrösse von 2.5 mm x 25 mm.

Eine Siebmatte 23 bis 30 des ersten Siebabschnitts 22 kann Maschen mit einer Maschengrösse oder Maschen mit einer unterschiedlichen Maschengrössen aufweisen.

Der Siebrost 21 weist weiter einen zweiten Siebabschnitt 32 mit vier (4) Siebmatten 33 bis 36 auf, wobei sich der zweite Siebabschnitt 32 an den ersten Siebabschnitt 22 direkt anschliesst. Die Siebmatten 33 bis 36 des zweiten Siebabschnitts 32 sind auswechselbar in der Spannwellen-Siebvorrichtung 11 festgelegt, so dass diese austauschbar sind.

Die Maschengrösse der Siebmatten 33 bis 36 des zweiten Siebabschnitts 32 betragen 140 mm2 bis 400 mm2. Die Siebmatten 33 bis 36 des zweiten Siebabschnitts 32 können alle die gleiche Maschengrösse und/oder Maschenausgestaltung aufweisen.

Im vorliegenden Ausführungsbeispiel ist die Maschengrösse einer Siebmatte unterschiedlich zu der Maschengrösse einer anderen Siebmatte. Beispielsweise weist die Siebmatte 33 eine Maschengrösse von 8 mm x 30 mm auf. Die Maschengrösse der Siebmatte 34 beträgt dagegen 12 mm x 12 mm auf. Die Siebmatte 35 weist eine Maschengrösse von 15 mm x 15 mm auf und die Siebmatte 36 weist eine Maschengrösse von 20 mm x 20 mm auf.

Eine Siebmatte 33 bis 36 des zweiten Siebabschnitts 32 kann Maschen mit einer Maschengrösse oder Maschen mit einer unterschiedlichen Maschengrössen aufweisen.

Die horizontale Sieblänge L1 des ersten Siebabschnitts 22 ist länger als die horizontale Sieblänge L2 des zweiten Siebabschnitts 32.

Der Siebrost 21 ist in diesem Ausführungsbeispiel mit einer Neigung β von 14° zur Horizontalen geneigt angeordnet.

Der Siebrost 21 ist von einer Abdeckung 16 abgedeckt, so dass kein Siebgut oben aus der Spannwellen-Siebvorrichtung 11 heraustreten kann.

Im Bereich des ersten Siebabschnitts 22 sind fünf (5) Rückhaltevorhänge 41 zum teilweisen Zurückhalten der Insektenlarven und Reststoffen vorgesehen. Im vorliegenden Beispiel sind diese Rückhaltevorhänge 41 in gleichmässigen Abständen zueinander angeordnet und erstrecken sich von der Abdeckung 16 vertikal in Richtung des Siebrostes 21. Die Rückhaltevorhänge 41 weisen hier jeweils eine vertikale Rückhaltehöhe auf, die dem 0.75-fachen der Höhe H des Raums 42 entspricht.

Im Bereich des zweiten Siebabschnitts 32 sind zwei (2) Rückhaltevorhänge 43 zum teilweisen Zurückhalten der Insektenlarven und Reststoffen vorgesehen. Im vorliegenden Beispiel sind diese Rückhaltevorhänge 43 - bezogen auf die Transportrichtung - in der vorderen Hälfte des zweiten Siebabschnitts 32 angeordnet. Auch die Rückhaltevorhänge 43 erstrecken sich von der Abdeckung 16 vertikal in Richtung des Siebrostes 21.

Der Raum 42 zwischen dem Siebrost 21 (bzw. dessen Mittellinie 31) und der Abdeckung 16 weist eine vertikal gemessene Höhe H auf. Im vorliegenden Ausführungsbeispiel weisen die Rückhaltevorhänge 41 jeweils eine vertikale Rückhaltehöhe auf, die dem 0.7-fachen der Höhe H des Raums 42 entspricht. Die Rückhaltevorhänge 43 weisen hier dagegen jeweils eine vertikale Rückhaltehöhe auf, die dem 0.6-fachen der Höhe H des Raums 42 entspricht.

In einer hier nicht dargestellten Ausführungsform können alle Rückhaltevorhänge 41 und 43 die gleiche vertikale Rückhaltehöhe aufweisen. Weiter können die Rückhaltevorhänge 41 im ersten Siebabschnitt 22 und/oder die Rückhaltevorhänge 43 im zweiten Siebabschnitt 32 jeweils auch unterschiedliche vertikale Rückhaltehöhen aufweisen.

Im Bereich der Zuführöffnung 12 und somit in Transportrichtung des Siebrostes 21 vor dem Siebrost 21 ist eine Abscheideeinrichtung 51 zum Abscheiden von Feinanteilen der Reststoffe vorgesehen. Diese Abscheideeinrichtung 51 umfasst hier eine Absaugeinrichtung, mit der Feinanteile, insbesondere Chitin, bereits vor der Siebung ausgeschieden werden. Diese Absaugeinrichtung umfasst ein Sauggebläse, dessen Saugstärke mittels einer Steuerung, insbesondere einer Steuerung der Absaugeinrichtung, einstellbar ist.

Anstelle oder ergänzend zu einer Absaugeinrichtung kann die Abscheideeinrichtung 51 eine Blaseinrichtung umfassen. Eine solche Blaseinrichtung umfasst ein Gebläse, dessen Blasstärke mittels einer Steuerung, insbesondere einer Steuerung der Absaugeinrichtung, einstellbar ist.

Dem ersten Siebabschnitt 22 ist eine erste Nachsiebeinrichtung 55 zum Aussieben von gesiebten Anteilen nachgeschaltet. Die erste Nachsiebeinrichtung 55 weist mehrere - hier beispielsweise sieben (7) - Siebmatten 56 auf. Die Maschengrössen und/oder Maschenausgestaltungen der Siebmatten 56 sind kleiner als die Maschengrössen und/oder Maschenausgestaltungen von zumindest einem Teil der Siebmatten 23 bis 30 des ersten Siebabschnitts 22, womit Feinanteile weiterhin durch die Maschen der ersten Nachsiebeinrichtung 55 fallen können, aber durchgesiebte Insekten, Insektenlarven oder Würmer aufgefangen werden.

Dem zweiten Siebabschnitt 32 ist eine zweite Nachsiebeinrichtung 65 zum Aussieben von gesiebten Anteilen nachgeschaltet und zwar nach der Ausgabeöffnung 14. Die zweite Nachsiebeinrichtung 65 weist mehrere - hier beispielsweise drei (3) - Siebmatten 66 auf. Die Maschengrössen und/oder Maschenausgestaltungen sind grösser als die Maschengrössen und/oder Maschenausgestaltungen der Siebmatten 33 bis 36 des zweiten Siebabschnitts 32 sind, womit Reststoffe weiterhin durch die Maschen der zweiten Nachsiebeinrichtung 65 fallen können, aber sich noch in den Reststoffen befindliche Insekten, Insektenlarven oder Würmer von dieser Nachsiebeinrichtung 65 aufgefangen werden.

Dem zweiten Siebabschnitt 32 ist weiter eine dritte Nachsiebeinrichtung 75 zum Trennen der gesiebten Anteilen der Insekten, Insektenlarven oder Würmer in verschiedene Grössenklassen nachgeschaltet. Die dritte Nachsiebeinrichtung 75 weist mehrere - hier beispielsweise vier (4) - Siebmatten 66 auf. Die Maschengrössen und/oder Maschenausgestaltungen sind kleiner als die Maschengrössen und/oder Maschenausgestaltungen von zumindest einem Teil der Siebmatten 33 bis 36 des zweiten Siebabschnitts 32, womit ein Teil der Insekten, Insektenlarven oder Würmer weiterhin durch die Maschen der dritten Nachsiebeinrichtung 75 fallen und der andere Teil der Insekten, Insektenlarven oder Würmer von diesen getrennt wird.

### Bezugszeichenliste:

- 11: Spannwellen-Siebvorrichtung
- 12: Zuführöffnung

- 14: Ausgabeöffnung

- 16: Abdeckung

- 21: Siebrost
- 22: 1. Siebabschnitt
- 23: Siebmatte
- 24: Siebmatte
- 25: Siebmatte
- 26: Siebmatte
- 27: Siebmatte
- 28: Siebmatte
- 29: Siebmatte
- 30: Siebmatte
- 31: Mittellinie von 21
- 32: 2. Siebabschnitt
- 33: Siebmatte
- 34: Siebmatte
- 35: Siebmatte
- 36: Siebmatte

- 41: Rückhaltevorhang bei 22
- 42: Raum
- 43: Rückhaltevorhang bei 32

- 51: Abscheideeinrichtung

- 55: 1. Nachsiebeinrichtung
- 56: Siebmatte v. 55

- 65: 2. Nachsiebeinrichtung
- 66: Siebmatte v. 65

- 75: 3. Nachsiebeinrichtung
- 76: Siebmatte v. 75

- L1: horizontale Sieblänge von 22
- L2: horizontale Sieblänge von 32
- H: vertikale Höhe von 41 bzw. 43
- B: Neigung von 21

## Patentansprüche

1. Spannwellen-Siebvorrichtung (11) zur Separierung von Insekten, insbesondere von Insektenlarven, oder von Würmern und Reststoffen, mit einem Siebrost (21), der einen ersten Siebabschnitt (22) und einen daran anschliessenden zweiten Siebabschnitt (32) aufweist, wobei die Maschengrösse im ersten Siebabschnitts (22) kleiner als die Maschengrösse im zweiten Siebabschnitts (32) ist.

2. Spannwellen-Siebvorrichtung gemäss Anspruch 1,
dass der erste Siebabschnitt (22) zumindest eine Siebmatte (23 bis 30), vorteilhaft mehrere Siebmatten (23 bis 30), weiter vorteilhaft 6 bis 20 Siebmatten (23 bis 30) und besonders vorteilhaft 8 bis 15 Siebmatten (23 bis 30), aufweist und/oder
der zweite Siebabschnitt (32) zumindest eine Siebmatte (33 bis 36), vorteilhaft mehrere Siebmatten (33 bis 36), weiter vorteilhaft 1 bis 20 Siebmatten (33 bis 36) und besonders vorteilhaft 1 bis 10 Siebmatten (33 bis 36), aufweist.

3. Spannwellen-Siebvorrichtung gemäss Anspruch 2,
dass die Maschengrösse der zumindest einen Siebmatte (23 bis 30) des ersten Siebabschnitts (22) 60 mm2 bis 110 mm2 beträgt.

4. Spannwellen-Siebvorrichtung gemäss Anspruch 2 oder 3,
dass die Maschengrösse der zumindest einen Siebmatte (33 bis 36) des zweiten Siebabschnitts (32) 140 mm2 bis 400 mm2 beträgt.

5. Spannwellen-Siebvorrichtung gemäss einem der Ansprüche 2 bis 4,
dass im ersten Siebabschnitt (22) die Maschengrösse einer Siebmatte (23 bis 30) unterschiedlich zu der Maschengrösse einer anderen Siebmatte (23 bis 30) ist und/oder
dass im zweiten Siebabschnitt (32) die Maschengrösse einer Siebmatte (33 bis 36) unterschiedlich zu der Maschengrösse einer anderen Siebmatte (33 bis 36) ist.

6. Spannwellen-Siebvorrichtung gemäss einem der Ansprüche 2 bis 5,
dass die Maschen einer Siebmatte (23 bis 30, 33 bis 36) unterschiedliche Maschengrössen aufweisen.

7. Spannwellen-Siebvorrichtung gemäss einem der vorangehenden Ansprüche,
dass die Sieblänge (L1) des ersten Siebabschnitts (22) länger als die Sieblänge (L2) des zweiten Siebabschnitts (32) ist.

8. Spannwellen-Siebvorrichtung gemäss einem der vorangehenden Ansprüche,
dass zumindest der Siebrost (21) geneigt angeordnet ist, wobei die Neigung (β) zur Horizontalen vorteilhaft maximal 25°, bevorzugt 5° bis 23° und besonders bevorzugt 10° bis 15° beträgt.

9. Spannwellen-Siebvorrichtung gemäss einem der vorangehenden Ansprüche,
dass zumindest ein Rückhaltevorhang (41, 43) zum teilweisen Zurückhalten der Insekten, insbesondere der Insektenlarven, oder der Würmer vorgesehen ist, wobei bevorzugt mehrere Rückhaltevorhänge (41, 43) vorgesehen sind.

10. Spannwellen-Siebvorrichtung gemäss Anspruch 9,
dass der zumindest eine Rückhaltevorhang (41, 43) eine Rückhaltehöhe aufweist, die maximal dem 0.95-fachen der Höhe (H) zwischen dem Siebrost (21) und einer Abdeckung (16) über dem Siebrost (21) oder einem bezogen auf die Aufstellausrichtung der Spannwellen-Siebvorrichtung (11) oberen Ende eines über dem Siebrost (21) befindlichen Bereichs entspricht.

11. Spannwellen-Siebvorrichtung gemäss einem der vorangehenden Ansprüche,
dass zumindest eine Abscheideeinrichtung (51) zum Abscheiden von Feinanteilen und/oder Leichtanteilen der Reststoffe vorgesehen ist, wobei
die zumindest eine Abscheideeinrichtung (51) vorteilhaft eine Absaugeinrichtung oder Blaseinrichtung umfasst, wobei weiter vorteilhaft die zumindest eine Abscheideeinrichtung (51) in Transportrichtung des Siebrostes (21) vor dem Siebrost (21) angeordnet ist.

12. Spannwellen-Siebvorrichtung gemäss einem der vorangehenden Ansprüche,
dass zumindest eine Nachsiebeinrichtung (55, 65) zum Aussieben von gesiebten Anteilen vorgesehen ist, wobei die zumindest eine Nachsiebeinrichtung (55, 65) vorteilhaft dem ersten Siebabschnitt (22) nachgeschaltet ist und/oder
dem zweiten Siebabschnitt (32) nachgeschaltet ist.

13. Verwendung einer Spannwellen-Siebvorrichtung (11), insbesondere einer Spannwellen-Siebvorrichtung (11) gemäss einem der vorangehenden Ansprüche, zur Separierung von Insekten, insbesondere von Insektenlarven, oder von Würmern und von Reststoffen.

14. Verwendung gemäss Anspruch 13,
zur Siebung von lebenden Insekten, insbesondere von lebenden Insektenlarven, oder von lebenden Würmern.

## Geänderte Patentansprüche

### Geänderte Patentansprüche gemäss Regel 137(2) EPÜ.

1. Spannwellen-Siebvorrichtung (11) zur Separierung von Insekten, insbesondere von Insektenlarven, oder von Würmern und Reststoffen, mit einem Siebrost (21), der einen ersten Siebabschnitt (22) und einen daran anschliessenden zweiten Siebabschnitt (32) aufweist, wobei die Maschengrösse im ersten Siebabschnitts (22) kleiner als die Maschengrösse im zweiten Siebabschnitts (32) ist, und
wobei zumindest ein Rückhaltevorhang (41, 43) zum teilweisen Zurückhalten der Insekten, insbesondere der Insektenlarven, oder der Würmer vorgesehen ist.

2. Spannwellen-Siebvorrichtung gemäss Anspruch 1,
dass der erste Siebabschnitt (22) zumindest eine Siebmatte (23 bis 30), vorteilhaft mehrere Siebmatten (23 bis 30), weiter vorteilhaft 6 bis 20 Siebmatten (23 bis 30) und besonders vorteilhaft 8 bis 15 Siebmatten (23 bis 30), aufweist und/oder
der zweite Siebabschnitt (32) zumindest eine Siebmatte (33 bis 36), vorteilhaft mehrere Siebmatten (33 bis 36), weiter vorteilhaft 1 bis 20 Siebmatten (33 bis 36) und besonders vorteilhaft 1 bis 10 Siebmatten (33 bis 36), aufweist.

3. Spannwellen-Siebvorrichtung gemäss Anspruch 2,
dass die Maschengrösse der zumindest einen Siebmatte (23 bis 30) des ersten Siebabschnitts (22) 60 mm2 bis 110 mm2 beträgt.

4. Spannwellen-Siebvorrichtung gemäss Anspruch 2 oder 3,
dass die Maschengrösse der zumindest einen Siebmatte (33 bis 36) des zweiten Siebabschnitts (32) 140 mm2 bis 400 mm2 beträgt.

5. Spannwellen-Siebvorrichtung gemäss einem der Ansprüche 2 bis 4,
dass im ersten Siebabschnitt (22) die Maschengrösse einer Siebmatte (23 bis 30) unterschiedlich zu der Maschengrösse einer anderen Siebmatte (23 bis 30) ist und/oder dass im zweiten Siebabschnitt (32) die Maschengrösse einer Siebmatte (33 bis 36) unterschiedlich zu der Maschengrösse einer anderen Siebmatte (33 bis 36) ist.

6. Spannwellen-Siebvorrichtung gemäss einem der Ansprüche 2 bis 5,
dass die Maschen einer Siebmatte (23 bis 30, 33 bis 36) unterschiedliche Maschengrössen aufweisen.

7. Spannwellen-Siebvorrichtung gemäss einem der vorangehenden Ansprüche,
dass die Sieblänge (L1) des ersten Siebabschnitts (22) länger als die Sieblänge (L2) des zweiten Siebabschnitts (32) ist.

8. Spannwellen-Siebvorrichtung gemäss einem der vorangehenden Ansprüche,
dass zumindest der Siebrost (21) geneigt angeordnet ist, wobei die Neigung (β) zur Horizontalen vorteilhaft maximal 25°, bevorzugt 5° bis 23° und besonders bevorzugt 10° bis 15° beträgt.

9. Spannwellen-Siebvorrichtung gemäss einem der vorangehenden Ansprüche,
wobei mehrere Rückhaltevorhänge (41, 43) vorgesehen sind.

10. Spannwellen-Siebvorrichtung gemäss Anspruch 9,
dass der zumindest eine Rückhaltevorhang (41, 43) eine Rückhaltehöhe aufweist, die maximal dem 0.95-fachen der Höhe (H) zwischen dem Siebrost (21) und einer Abdeckung (16) über dem Siebrost (21) oder einem bezogen auf die Aufstellausrichtung der Spannwellen-Siebvorrichtung (11) oberen Ende eines über dem Siebrost (21) befindlichen Bereichs entspricht.

11. Spannwellen-Siebvorrichtung gemäss einem der vorangehenden Ansprüche,
dass zumindest eine Abscheideeinrichtung (51) zum Abscheiden von Feinanteilen und/oder Leichtanteilen der Reststoffe vorgesehen ist, wobei
die zumindest eine Abscheideeinrichtung (51) vorteilhaft eine Absaugeinrichtung oder Blaseinrichtung umfasst, wobei weiter vorteilhaft die zumindest eine Abscheideeinrichtung (51) in Transportrichtung des Siebrostes (21) vor dem Siebrost (21) angeordnet ist.

12. Spannwellen-Siebvorrichtung gemäss einem der vorangehenden Ansprüche,
dass zumindest eine Nachsiebeinrichtung (55, 65) zum Aussieben von gesiebten Anteilen vorgesehen ist, wobei die zumindest eine Nachsiebeinrichtung (55, 65) vorteilhaft dem ersten Siebabschnitt (22) nachgeschaltet ist und/oder dem zweiten Siebabschnitt (32) nachgeschaltet ist.

13. Verwendung einer Spannwellen-Siebvorrichtung (11) gemäss einem der vorangehenden Ansprüche, zur Separierung von Insekten, insbesondere von Insektenlarven, oder von Würmern und von Reststoffen.

14. Verwendung gemäss Anspruch 13,
zur Siebung von lebenden Insekten, insbesondere von lebenden Insektenlarven, oder von lebenden Würmern.
